# EUROPÄISCHE PATENTSCHRIFT

(11) **EP 2 205 885 B1**
(45) Veröffentlichungstag und Bekanntmachung des Hinweises auf die Patenterteilung: **06.04.2011**
(21) Anmeldenummer: 08802288.4
(22) Anmeldetag: 17.09.2008
(51) Int. Cl.: F16D 65/097

(54) **SCHEIBENBREMSE UND BREMSBELAG**
DISC BRAKE AND BRAKE PAD
FREIN À DISQUE ET GARNITURE DE FREIN

(30) Priorität: 01.10.2007 DE 102007046945
(43) Veröffentlichungstag der Anmeldung: 14.07.2010
(73) Patentinhaber: KNORR-BREMSE Systeme für Nutzfahrzeuge GmbH, 80809 München (DE)
(72) Erfinder: RAFFIN, Christian, 85630 Grasbrunn (DE); GRUBER, Markus, 85560 Ebersberg (DE); MACKE, Wlodzimierz, 82140 Olching (DE); LEHNER, Thomas, 81677 München (DE)
(74) Vertreter: Mattusch, Gundula
(86) Internationale Anmeldenummer: PCT/EP2008/007762
(87) Internationale Veröffentlichungsnummer: WO 2009/046818

(56) Entgegenhaltungen:
- WO-A-2007/051614
- DE-A1- 4 020 287
- DE-A1-102006 051 965

## Beschreibung

Die Erfindung betrifft eine Scheibenbremse entsprechend dem Oberbegriff des Anspruchs 1 sowie einen Bremsbelag gemäß dem Oberbegriff des Anspruchs 9.

Aus der gattungsbildenden DE 40 20 487 A1 ist es bekannt, zur Positionssicherung der beiden Bremsbeläge diese jeweils mit einer Belaghaltefeder zu versehen, die im oberen, einer Montageöffnung des Bremssattels zugewandten Randbereich derart am Bremsbelag befestigt ist, dass sie von einem sich quer dazu, also in Achsrichtung der Bremsscheibe erstreckenden Belaghaltebügel unter Vorspannung in den Belagschacht eines ortsfesten Bremsträgers oder eines Bremssattels gedrückt wird. Dabei ist der Belaghaltebügel in zwei sich gegenüberliegenden, die Montageöffnung begrenzenden Bereichen des Bremssattels festgelegt.

Der bekannte Belaghaltebügel ist als Blechteil ausgebildet und weist einen im wesentlichen rechteckigen Querschnitt auf, so dass der Belaghaltebügel mit einer ebenen Unterseite an der Belaghaltefeder anliegt.

Beim Betrieb kann es zu einer Relativbewegung zwischen dem Belaghaltebügel und der Belaghaltefeder quer zur Längserstreckung des Belaghaltebügels kommen, wodurch es zu zusätzlichen Belastungen der entsprechenden Bauteile kommt, beispielsweise zu einer Abnutzung von Oberflächenbeschichtungen, die letztendlich das Korrosionsverhalten beeinflussen.

Neben diesen funktionalen Nachteilen bietet die bekannte Bremsbelaghalterung aufgrund ihrer Konfiguration keine Gewähr dafür, dass nicht Bremsbeläge eingebaut werden, die nicht für den entsprechenden Bremsentyp geeignet sind.

So sind ohne weiteres Bremsbeläge einsetzbar, deren Bauhöhe geringer ist als die der dafür bestimmten Bremsbeläge, so dass die Bremsbeläge bzw. deren Belaghaltefeder dann nicht von dem Belaghaltebügel kontaktiert und unter Vorspannung gehalten werden. Die durch den Einsatz des Belaghaltebügels gewünschte Wirkung, nämlich ein Toleranzausgleich sowie eine Reduzierung bzw. eine Verhinderung der Entstehung von Klappergeräuschen, wie sie im Fahrbetrieb des Fahrzeuges auftreten können, tritt in diesem Fall nicht ein. Im Prinzip kann jeder Bremsbelag montiert werden, der eine Mindesthöhe unterschreitet.

Die geschilderte Problematik ergibt sich auch bei einer in der WO 2007/051614 A1 geoffenbarten gattungsgemäßen Scheibenbremse.

Ein Bremsbelag nach dem Oberbegriff des Anspruchs 9 ist aus DE 10 2006 051965 A1 bekannt. Zur Aufnahme eines Verschleißsensors ist dabei in der Belagträgerplatte und dem darauf befestigten Reibbelag eine quer zur Längserstreckung des Bremsbelages verlaufende Nut angeordnet.

Der Erfindung liegt die Aufgabe zugrunde, eine Scheibenbremse sowie einen Bremsbelag der gattungsgemäßen Art so weiterzuentwickeln, dass deren Betriebssicherheit verbessert und die Standzeit erhöht wird.

Diese Aufgabe wird durch eine Scheibenbremse mit den Merkmalen des Anspruchs 1 und einen Bremsbelag mit den Merkmalen des Anspruchs 9 gelöst.

Eine in diesem Sinne ausgebildete Scheibenbremse erhöht die Betriebssicherheit insgesamt insofern, als nunmehr ausschließlich für diesen einen Bremsentyp vorgesehene Bremsbeläge eingesetzt werden können. Insoweit bildet die erfindungsgemäße Ausgestaltung der Bremsbelaghalterung eine Kodierung.

Bremsbeläge, die keine Ausnehmung aufweisen, in die der neue Belaghaltebügel eintauchen kann, sind nicht einbaubar, da der Belaghaltebügel dann nicht montierbar ist.

Da es sich bei Bremsbelägen um sicherheitsrelevante Bauteile handelt, die auch ordnungsgemäß eingebaut werden müssen, kommt der Erfindung bzw. der dadurch erreichbaren Wirkung eine besondere Bedeutung zu.

Dies trifft gleichermaßen auf die nunmehr im Betrieb, das heißt bei einer Bremsung entstehende Relativbewegung zwischen dem Belaghaltebügel und der Belaghaltefeder in Umfangsrichtung der Bremsscheibe zu, da der Bremsbelag durch den Eingriff des Belaghaltebügels praktisch formschlüssig gehalten ist.

Die bislang durch die Relativbewegung verursachte besondere Beanspruchung der Bauteile, also der Belaghaltefeder und des Belaghaltebügels, ist nicht mehr gegeben, wodurch sich eine durchaus bemerkenswerte Erhöhung der Standzeit dieser Bauteile ergibt, wobei hierzu unter anderem beiträgt, dass Oberflächenbeschichtungen dieser Bauteile nicht abgenutzt und damit keiner weiteren Korrosionsgefahr ausgesetzt werden.

Nach einer vorteilhaften Weiterbildung der Erfindung ist vorgesehen, dass der abgewinkelte Schenkel des Belaghaltebügels, der in die daran angepasste Ausnehmung des Bremsbelages eingreift, ausschließlich in der Belagträgerplatte vorgesehen ist. Prinzipiell denkbar ist aber auch, den Schenkel so auszubilden, dass er auch in eine Ausnehmung des Reibbelages eingreift.

Ein weiterer Gedanke der Erfindung sieht vor, dass der bezogen auf die Drehachse der Bremsscheibe radial abgewinkelte Schenkel des Belaghaltebügels mit einer Skalierung, beispielsweise in Form von Skalenstrichen, versehen ist, durch die ein Verschleiß des Bremsbelages bzw. dessen Reibbelages ohne weiteres erkennbar ist. Naturgemäß trägt dies gleichfalls zur Erhöhung der Betriebssicherheit bei.

Dabei ist hervorzuheben, dass diese Kontrollmöglichkeit praktisch ohne besonderen konstruktiven und fertigungstechnischen Aufwand erzielbar ist und die Verschleißerkennung leicht durchführbar ist. Hierzu reicht eine Inaugenscheinnahme durch die Montageöffnung des Bremssattels, durch die die Bremsbeläge ebenso erkennbar sind, wie der Belaghaltebügel, der die Montageöffnung überspannt.

Bezogen auf die Längsachse des Belaghaltebügels können beidseitig versetzt zueinander angeordnete Schenkel vorgesehen sein, wobei ein Schenkel in den zuspannseitigen und der andere, auf der gegenüberliegenden Längsseite angeordnete Schenkel in den reaktionsseitigen Bremsbelag eingreift. Dies ist dann besonders sinnvoll, wenn die Bremsbeläge identisch sind.

Grundsätzlich besteht auch die Möglichkeit, den die beiden, jeweils einem Bremsbelag zugeordneten Schenkel an einer Längsseite des Belaghaltebügels anzuordnen oder aber mittig des Belaghaltebügels. In jedem Fall ist neben dem Bremsbelag auch die zugeordnete Belaghaltefeder entsprechend auszuformen und zwar so, dass sie in die Ausnehmung des Bremsbelages hineinragt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäße Scheibenbremse in einer perspektivischen Ansicht
- Figur 2: die Scheibenbremse in einer geschnittenen Seitenansicht.

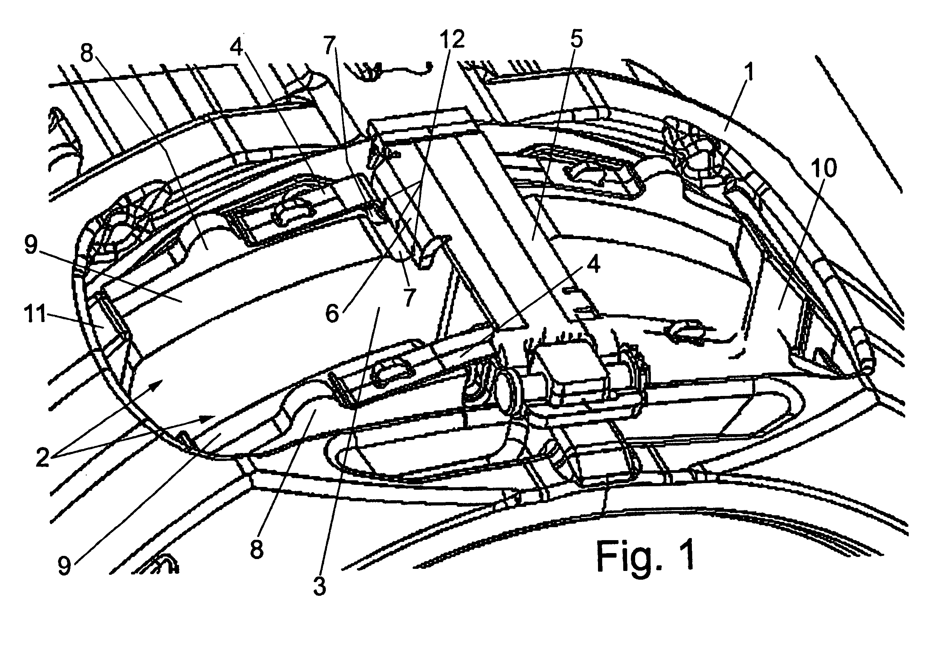

In der Figur 1 ist ein Teilausschnitt einer Scheibenbremse für ein Nutzfahrzeug dargestellt, mit einem Bremssattel 1, in dem zwei, beidseitig einer nicht dargestellten Bremsscheibe angeordnete Bremsbeläge 2 gelagert sind.

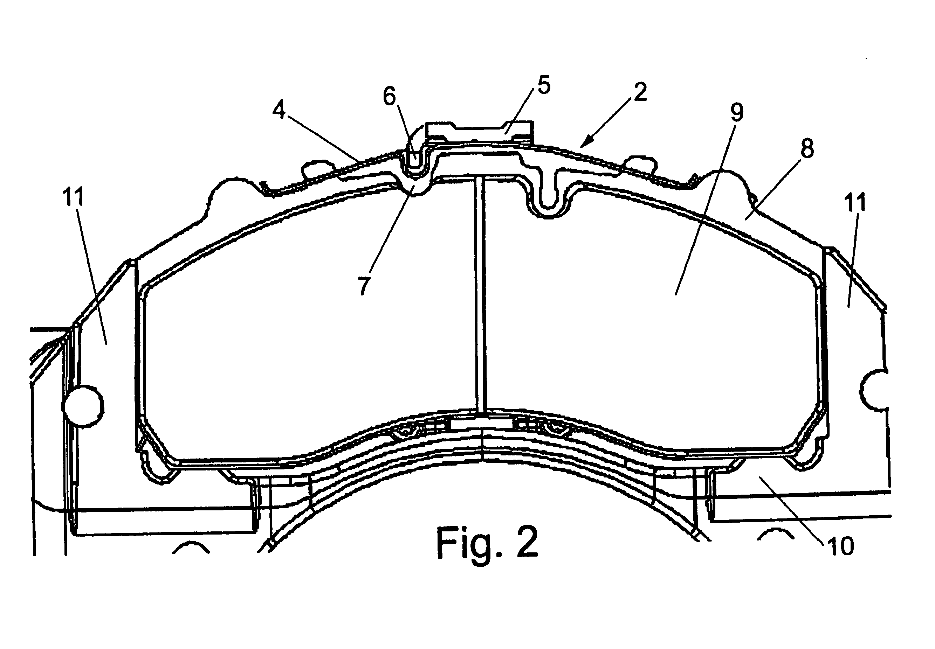

Dabei liegen diese Bremsbeläge in einem Belagschacht eines ortsfesten Bremsträgers 10 (Figur 2) ein und werden seitlich durch Bremsträgerhörner 11 abgestützt.

Jeder Bremsbelag 2 besteht aus einer Belagträgerplatte 8 und einem darauf befestigten Reibbelag 9, der im Fall eine Bremsung die Bremsscheibe kontaktiert.

Die Bremsbeläge 2 sind jeweils federbelastet durch eine Belaghaltefeder 4 in dem Bremsträger 10 gehalten, wobei sich an den Belaghaltefedern 4 ein Belaghaltebügel 5 abstützt, der eine Montageöffnung 3, quer zur Längserstreckung der Bremsbeläge 2 überspannt und beidseitig am Bremssattel 1 befestigt ist.

Erfindungsgemäß weist der Belaghaltebügel 5 mindestens einen, bezogen auf die Bremsscheibe, sich etwa radial erstreckenden Schenkel 6 auf, der in eine Ausnehmung 7 des Bremsbelages eintaucht.

Im vorliegenden Ausführungsbeispiel ist der erkennbare Schenkel 6 abgewinkelt zum Belaghaltebügel 5 im übrigen angeformt, wobei dieser als Stanzteil ausgebildet ist, so dass die Herstellung sehr preiswert möglich ist.

Die Ausnehmung 7 des Bremsbelages ist gleichermaßen in der Belagträgerplatte 8, dem Reibbelag 9 und in der zugeordneten Belaghaltefeder 4 vorgesehen und so bemessen, dass der Bremsbelag 2 quer zur Längserstreckung des Belaghaltebügels 5 etwa formschlüssig gehalten ist.

In der Figur 1 ist der zuspannseitige Bremsbelag 2 als mit der Ausnehmung 7 versehen erkennbar, in die der Schenkel 6 eingreift, der auf seiner von außen sichtbaren Seite mit eine Skalierung bildenden Strichen 12 versehen ist. In Zusammenschau mit dem Bremsbelag 2 ist mittels dieser Skalierung der Verschleiß des Reibbelages 9 bzw. das Erreichen einer kritischen Grenze ablesbar.

### Bezugszeichenliste

- 1: Bremssattel
- 2: Bremsbelag
- 3: Montageöffnung
- 4: Belaghaltefeder
- 5: Belaghaltebügel
- 6: Schenkel
- 7: Ausnehmung
- 8: Belagträgerplatte
- 9: Reibbelag
- 10: Bremsträger
- 11: Bremsträgerhorn
- 12: Strich

## Patentansprüche

1. Scheibenbremse, insbesondere für ein Nutzfahrzeug, mit beidseitig einer Bremsscheibe zugeordneten Bremsbelägen (2), die mittels jeweils einer Belaghaltefeder (4) federbelastet in einem Belagschacht eines ortsfesten Bremsträgers (10) oder eines Bremssattels (1) gehalten sind und an denen sich ein in Achsrichtung der Bremsscheibe erstreckender, am Bremssattel (1) befestigter Belaghaltebügel (5) abstützt, **dadurch gekennzeichnet, dass** der Belaghaltebügel (5) mindestens einen, bezogen auf die Bremsscheibe sich etwa radial erstreckenden, in eine Ausnehmung (7) zumindest eines Bremsbelages (2) eintauchenden Schenkel (6) aufweist.

2. Scheibenbremse nach Anspruch 1, **dadurch gekennzeichnet, dass** der Schenkel (6) gegenüber dem Haltebügel (5) im übrigen abgewinkelt ist.

3. Scheibenbremse nach Anspruch 1 oder 2, **dadurch gekennzeichnet, dass** der Schenkel (6) an den Haltebügel (5) im übrigen angeformt ist.

4. Scheibenbremse nach einem der vorhergehenden Ansprüche, **dadurch gekennzeichnet, dass** an jeder Längsseite des Belaghaltebügels (5) ein Schenkel (6) angeformt ist.

5. Scheibenbremse nach einem der vorhergehenden Ansprüche, **dadurch gekennzeichnet, dass** der Schenkel (6) sich über die Dicke des Bremsbelages (2) erstreckt.

6. Scheibenbremse nach einem der vorhergehenden Ansprüche, **dadurch gekennzeichnet, dass** der Schenkel (6) mit einer Skalierung zur Verschleißerkennung des Bremsbelages (2) versehen ist.

7. Scheibenbremse nach einem der vorhergehenden Ansprüche, **dadurch gekennzeichnet, dass** der Schenkel (6) in Umfangsrichtung der Bremsscheibe etwa formschlüssig in der Ausnehmung (7) einliegt.

8. Scheibenbremse nach einem der vorhergehenden Ansprüche, **dadurch gekennzeichnet, dass** die Ausnehmung (7) in der Belaghaltefeder (4), einer Belagträgerplatte (8) und/oder einem damit verbundenen Reibbelag (9) vorgesehen ist.

9. Bremsbelag einer Scheibenbremse, insbesondere für ein Nutzfahrzeug, bestehend aus einer Belagträgerplatte (8), einem darauf befestigten Reibbelag (9) sowie einer mit der Belagträgerplatte (8) verbundenen Belaghaltefeder (4), **dadurch gekennzeichnet, dass** die Belaghaltefeder (4), und die Belagträgerplatte (8) und/oder der Reibbelag (9) eine quer zur Längserstreckung verlaufende gemeinsame Ausnehmung (7) aufweisen.

## Claims

1. Disc brake, in particular for a utility vehicle, with brake pads (2) arranged on either side of a brake disc, which are in each case held under spring loading by a brake-pad-holder spring (4) in a brake-pad shaft of a fixed brake support (10) or a brake calliper (1) and against which a brake-pad-holder bracket (5) attached to the brake calliper (1) and extending in the axial direction of the brake disc is supported, **characterised in that** the brake-pad-holder bracket (5) has at least one sidepiece (6) that extends approximately radially relative to the brake disc and projects into a recess (7) of at least one brake pad (2).

2. Disc brake according to Claim 1, **characterised in that** the sidepiece (6) is angled relative to the brake-pad-holder bracket (5).

3. Disc brake according to Claims 1 or 2, **characterised in that** the sidepiece (6) is formed on the brake-pad-holder bracket (5).

4. Disc brake according to any of the preceding claims, **characterised in that** a sidepiece (6) is formed on each long side of the brake-pad-holder bracket (5).

5. Disc brake according to any of the preceding claims, **characterised in that** the sidepiece (6) extends over the thickness of the brake pad (2).

6. Disc brake according to any of the preceding claims, **characterised in that** the sidepiece (6) is provided with a graduation mark to enable assessment of the wear of the brake pad (2).

7. Disc brake according to any of the preceding claims, **characterised in that** the sidepiece (6) is secured substantially positively in the recess (7) in the circumferential direction of the brake disc.

8. Disc brake according to any of the preceding claims, **characterised in that** the recess (7) is formed in the brake-pad-holder spring (4), in a brake-pad support plate (8) and/or in a friction lining (9) affixed thereto.

9. Brake pad for a disc brake, in particular for a utility vehicle, which consists of a brake-pad support plate (8), a friction lining (9) affixed thereto and a brake-pad-holder spring (4) connected to the said brake-pad support plate (8), **characterised in that** the brake-pad-holder spring (4) and the brake-pad support plate (8) and/or the friction lining (9) have a common recess (7) that extends transversely to their length.

## Revendications

1. Frein à disque, notamment pour un véhicule utilitaire, ayant des garnitures (2) de frein, qui sont associées des deux côtés à un disque de frein et qui sont maintenues en étant chargées par un ressort, au moyen de respectivement un ressort (4) de maintien de garniture, dans un puits de garniture d'un support (10) de frein ou d'un étrier (1) de frein et sur lesquelles s'appuie un archet (5) de maintien de garniture fixé à l'étrier (1) de frein et s'étendant dans la direction axiale du frein à disque, **caractérisé en ce que** l'archet (5) de maintien de garniture a au moins une branche (6) s'étendant à peu près radialement par rapport au disque de frein et pénétrant dans un évidement (7) d'au moins une garniture (2) de frein.

2. Frein à disque suivant la revendication 1, **caractérisé en ce que** la branche (6) est, en outre, coudée par rapport à l'archet (5) de maintien.

3. Frein à disque suivant la revendication 1 ou 2, **caractérisé en ce que** la branche (6) est, en outre, formée sur l'archet (5) de maintien.

4. Frein à disque suivant l'une des revendications précédentes, **caractérisé en ce qu'**une branche (6) est formée sur chaque grand côté de l'archet (5) de maintien de garniture.

5. Frein à disque suivant l'une des revendications précédentes, **caractérisé en ce que** la branche (6) s'étend sur l'épaisseur de la garniture (2) de frein.

6. Frein à disque suivant l'une des revendications précédentes, **caractérisé en ce que** la branche (6) est pourvue d'une échelle de détection d'usure de la garniture (2) de frein.

7. Frein à disque suivant l'une des revendications précédentes, **caractérisé en ce que** la branche (6) pénètre dans la direction périphérique du disque de frein, à peu près à complémentarité de forme dans l'évidement (7).

8. Frein à disque suivant l'une des revendications précédentes, **caractérisé en ce que** l'évidement (7) est prévu dans le ressort (4) de maintien de garniture dans une plaque (8) de support de garniture et/ou dans une garniture (9) de frein, qui y est reliée.

9. Garniture d'un frein à disque, notamment pour un véhicule utilitaire, constituée d'une plaque (8) de support de garniture, d'une garniture (9) de friction qui y est fixée, ainsi que d'un ressort (4) de maintien de garniture relié à la plaque (8) de support de garniture, **caractérisée en ce que** le ressort (4) de maintien de garniture et la plaque (8) de support de garniture et/ou la garniture (9) de friction ont un évidement (7) commun s'étendant transversalement à l'étendue longitudinale.
